# EUROPEAN PATENT SPECIFICATION

(11) **EP 0 544 922 B1**
(45) Date of publication and mention of the grant of the patent: **18.09.1996**
(21) Application number: 92913262.9
(22) Date of filing: 22.06.1992
(51) Int. Cl.: B60R 21/26

(54) **GAS GENERATOR HAVING HOUSING OF DUAL STRUCTURE**
GASGENERATOR MIT DOPPELSTRUKTURGEHÄUSE
GENERATEUR DE GAZ A BOITIER A STRUCTURE DOUBLE

(30) Priority: 21.06.1991 JP 150337/91
(43) Date of publication of application: 09.06.1993
(73) Proprietor: DAICEL CHEMICAL INDUSTRIES, LTD., Sakai-shi Osaka-fu 590 (JP)
(72) Inventor: OGAWA, Akihisa, 268-8, Shimoyobe Yobe-ku, Hyogo 671-12 (JP); MURAMATSU, Osamu, 96-21, Toushincho 3-chome, Hyogo 671-11 (JP)
(74) Representative: Grünecker, Kinkeldey, Stockmair & Schwanhäusser Anwaltssozietät
(86) International application number: PCT/JP92/00793
(87) International publication number: WO 93/00234

(56) References cited:
- FR-A- 2 625 961
- JP-A- 2 155 859
- JP-A- 3 128 744

## Description

The invention refers to a gas generator having a central cylindrical holder in which a squib/enhancer is housed, a combustion chamber surrounding said holder and holding gas generants therein, a filter/cooling chamber formed annularly so as to surround said combustion chamber, and adapted to allow the entry thereinto of a gas after having passed through openings communicating with said combustion chamber, and gas outlet ports formed at said filter/cooling chamber and through which the gas rushes into the air bag after having passed through a filter and a coolant, said combustion chamber being formed with a housing having an annular top wall fixed at an inner edge portion thereof to a circumferential edge of said central cylindrical holder, and a diffuser and an annular closure being provided, of which an extended portion of the diffuser and an outer end of the closure are welded together, so as to form the filter/cooling chamber, said outlet ports being provided in an extended portion of said diffuser, and said diffuser covering a top wall of said housing and being joined with the top wall of said housing, thereby forming a double wall of said combustion chamber.

Such a gas generator is known from FR-A- 2 625 961 of which features form the preamble of claim 1. It is used in the automotive industry and usually placed in the steering wheel of a car, in order to inflate an air bag in case of an accident. If the centrally located enhancer/igniter ignites, the gas generators will generate gas, which expands from the combustion chamber into the filter/cooling chamber and through the outlet ports into the air bag, inflating the air bag. Since the gas generation has to be completed within fractions of a second, the applied pressures within the gas generator are very high. In order to avoid explosions of the gas generator, its structure has to be very rigid. At the same time, weight and size of the gas generator have to be minimised due to the space limitations imposed by its location in the hub of a steering wheel. In case of the gas generator, as disclosed in FR-A-2 625 961 the gas generator is provided with bolts through the closure and the diffuser in order to obtain the required strength of the gas generator. Under abnormal conditions, such as a fire, the structure is designed to fracture with the shells remaining secured proximate to each other. However, additional bolts need additional assembly time and increase the complexity of assembly. In addition the weight of the gas generator may increase substantially.

Other gas generators are known from US patent No. 4 547 342 (Morton Thiokol, Inc.), where a container for gas generants consists of upper and lower half shell bodies, and partition walls for forming three cylinders which are provided in the halved shell bodies. This document discloses, in addition to a bottom wall, an aluminium retaining ring, which serves to retain the gas generant pellets during inertia welding of the bottom wall.

The Japanese patent application No. 152639/1980 (Bayern Chemie GmbH.) discloses a gas generator in which a central cylinder holding an igniter therein, a cover and an S-shaped casing form a combustion chamber and a filter chamber, and outlet ports of the filter chamber (expansion chamber) is formed in an extended portion of the casing by punching slits therein. As for the gas generator as disclosed in FR-A-2 625 961, improvements in terms of weight and size of the gas generators as disclosed in US patent application No. 4 547 342 and Japanese patent application No. 152639/1980 are desirable.

An object of the present invention is to provide a gas generator of a weight-reduced structure and which is advantageous with respect to the manufacturing.

The object is achieved by the gas generator according to the invention, wherein said housing having an annular bottom wall fixed at the inner edge portion thereof to an edge portion of an opposite end of said holder, said annular closure covering said bottom wall of said housing of said combustion chamber, thereby forming a double wall with the annular bottom wall of said housing, said annular closure being welded at an inner edge portion thereof to the edge portion of the lower end of said cylindrical holder.

In the gas generator according to the present invention, the upper and lower plate portions of the combustion chamber, the pressure in which becomes high, are doubly formed. Namely, the circular plate of the diffuser is laminated on the annular top wall of the housing of the combustion chamber to form a double wall, and the annular plate of the closure on the annular top wall of the combustion chamber to also form a double wall. The combustion chamber is thus doubly formed, so that the safety of the gas generator is secured advantageously. The expansion chamber (filter/coolant chamber) is formed with a combination of the extended portion of the diffuser and the flange at the outer circumference of the closure, whereby a pressure container of a double structure is formed which consists of a housing forming the combustion chamber and a housing covering all parts of the gas generator including the combustion chamber. When the housing of the combustion chamber in the gas generator according to the present invention is formed, the sealing of the gas generants can be done by a non-welding method.

For example, the housing forming the combustion chamber has a structure which is made by welding the inner circumferential edge of the annular top wall of a combustor cup to the circumferential edge of the top wall of the central cylindrical holder, then inserting gas generants in the combustion chamber, fixing the cover forming the annular bottom wall to the edge portion of the lower end of the central cylindrical holder, and crimping the circumferential edge portion of the cover to the edge portion of the lower end of a side wall of the combustor cup, whereby the gas generants are sealed; or by welding an annular bottom wall of the combustor cup to the edge portion of the lower end of the central cylindrical holder, inserting gas generants in the combustion chamber, and then bending the upper end portion of the combustor cup by a press and fixing the bent end portion to the circumferential edge of the top wall of the central cylindrical holder by riveting, whereby the gas generants are sealed.

According to the housing structure of the present invention, the weight thereof can be reduced owing to the employment of a thin-walled structure of aluminum and the like, which can be produced by press working. Moreover, the gas generants can be sealed by a non-welding method. This enables an assembly line and the relative equipment to be simplified.

When the housing structure of the gas generator according to the present invention is employed, the following effects can be obtained.
(1) Since the upper and lower plate portions of the combustion chamber in which the pressure becomes high are doubly formed, the safety of the gas generator can be secured advantageously. Since these walls can be formed with thin plates, the weight of the device can be reduced.
(2) Since the sealing of the gas generants can be done by a non-welding method, an assembly line and the relative equipment can be simplified.

### [Brief Description of the Drawings]

Fig. 1 is a schematic longitudinal section of an embodiment of the gas generator according to the present invention.

Fig. 2 is a schematic longitudinal section of another embodiment of the gas generator according to the present invention.

### [Detailed Description of the Preferred Embodiments]

The details of the present invention will now be described on the basis of the embodiments thereof shown in the drawings.

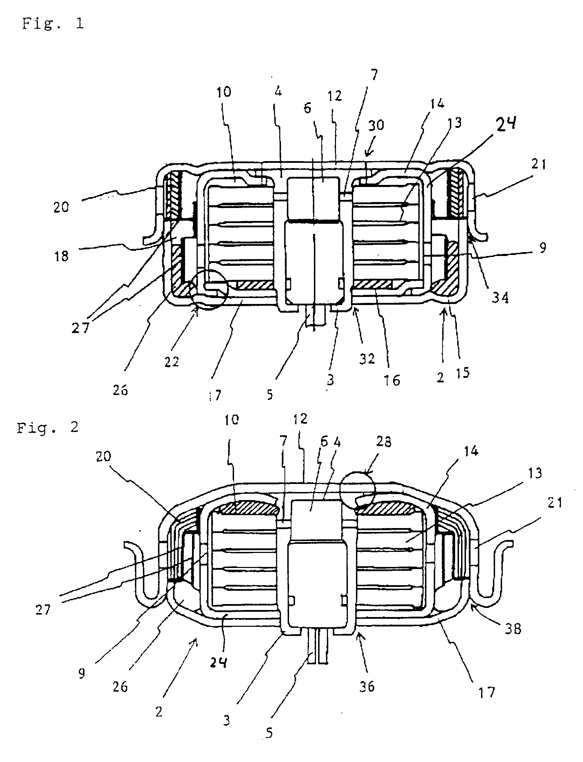

Fig. 1 shows a longitudinal sectioned side elevation of an embodiment of the gas generator according to the present invention for an air bag for protecting the crew of an automobile.

A gas generator 2 covered at its upper portion with a folded expansible air bag (not shown) cooperates with a collision sensor (not shown) to form a safety device for protecting the crew of an automobile, and this safety device is held with the air bag in a steering wheel of an automobile.

The gas generator 2 has a central cylindrical holder 4 housing a squib/enhancer in the central portion thereof. After the squib/enhancer has been inserted in the holder 4, the lower end portion of the holder is crimped (shown by a reference numeral 3) and connected to a collision sensor through conductor 5. The inner circumferential edge of an annular top wall of a cylindrical combustor cup 14 is welded to the circumferential edge of a top wall of the holder 4 to form part of a housing 24 of a combustion chamber 10, in which a required number of disc type gas generants 13 are held in layers in advance. An annular cover 16 forming a bottom wall of the housing of combustion chamber 10 is then set on the circumferential edge portion of the lower end of the central cylindrical holder 4, and the lower end portion of the combustor cup 14 is crimped to the outer circumferential edge portion of this cover 16, whereby the gas generants are sealed. On the outer side of the housing of the combustion chamber thus formed, a disc type diffuser 12 having an extended portion 11 is laminated on the crew-side top walls of the central holder 4 and combustor cup 14, and an annular closure 17 on the opposite top wall of the combustor cup 14. The extended portion 11 of the diffuser 12 and a flange 15 at the outer circumference of the closure 17 form a filter/coolant chamber (expansion chamber) 18 in which a filter and a coolant are provided. The outer circumferential edge of the flange 15 is welded to the inner circumferential edge of the lower end of the extended portion 11 of the diffuser 12, and the inner circumferential edge of the closure 17 and the inner circumferential edge of the cover 16 to the outer circumferential edge of the lower end portion of the central holder 4. A combustion gas produced from the gas generants 13 ignited by an igniter 6 in the holder 4 through the openings 7 provided in the circumferential wall of the holder flows into the expansion chamber 18 through a plurality of communication ports 9 provided in an annular side wall of the combustor cup 14, and passes through a coolant 26 and a filter 20 therein, and the resultant gas flows out of a plurality of gas outlet ports 21 provided in an outer side wall of the diffuser 12 into an air bag to expand the same instantaneously. A retainer 27 is provided between the coolant 26 and filter 20 so that a gas flow first impinging upon the coolant 26 then passes through the filter 20.

In the housing 24 of the gas generator according to the present invention shown in Fig. 1, the connecting of the central cylindrical holder 4 with combustor cup 14 and closure 17 and the connecting of the diffuser 12 with closure 17 together are done via annular welding seams 30, 32, 34 by electron beam welding or laser beam welding, whereas the fixing of the edge of the lower end portion of a side wall of the combustor cup 14 to the circumference of the cover 16 after the completion of the insertion of the gas generants 13 into the combustor cup 14 by crimping 22.

Fig. 2 shows a schematic longitudinal section of another embodiment of the gas generator according to the present invention, and this embodiment is substantially the same as the embodiment of Fig. 1 except for the housing of the combustion chamber.

Namely, the embodiment of Fig. 2 differs from that of Fig. 1 in the following points. In order to form the housing 24 which defines the combustion chamber 10, with a combustor cup 14, its annular bottom wall 16' is welded (annular welding seam 36) to the edge portion of the lower end of a hollow cylindrical holder 4, and gas generants 13 are then inserted therein, the upper end portion of the combustor cup 14 being then bent by a press and fixed to the circumferential portion of the top wall of the hollow cylindrical holder 4 by riveting 28, whereby the gas generants are sealed.

## Claims

1. A gas generator having a central cylindrical holder (4) in which a squib/enhancer is housed, a combustion chamber (10) surrounding said holder (4) and holding gas generants (13) therein, a filter/cooling chamber (18) formed annularly so as to surround said combustion chamber (10), and adapted to allow the entry thereinto of a gas after having passed through openings (9) thereof communicating with said combustion chamber (10), and gas outlet ports (21) formed in said filter/cooling chamber (18) and through which the gas rushes into the air bag after having passed through a filter (20) and a coolant (26), said combustion chamber (10) being formed with a housing (24) having an annular top wall fixed at an inner edge portion thereof to a circumferential edge of said central cylindrical holder (4), and a diffuser (12) and an annular closure (17) being provided, of which an extended portion of the diffuser (12) and an outer end of the closure (17) are welded together, so as to form the filter/cooling chamber (18), said outlet ports (21) being provided in an extended portion of said diffuser and said diffuser covering a top wall of said housing and being joined with the top wall of said housing (24) thereby forming a double wall of said combustion chamber (10), **characterised by** said diffuser (12) having a top wall covering said top wall of said holder (4), said housing (24) having an annular bottom wall (16) fixed at the inner edge portion thereof to an edge portion of the opposite end of said holder (4), said annular closure (17) covering said bottom wall of said housing (24) of said combustion chamber, thereby forming a double wall with the annular bottom wall of said housing, said annular closure (17) being welded at an inner edge portion thereof to the edge portion of the lower end of said cylindrical holder (4).

2. The gas generator according to claim 1, wherein said housing (24) forming said combustion chamber (10) is constructed so that said gas generants are placed therein after an inner circumferential edge portion of an annular top wall of the combustion cup (14) has been welded to the circumference of said top wall of said central cylindrical holder, the cover (16) which forms an annular bottom wall of said housing (24) being then fixed to an edge portion of a lower end of said central cylindrical holder, a circumferential portion of said cover being crimped to an edge portion of a lower end of a side wall of said combustor cup (14) to seal said gas generants.

3. The gas generator according to claim 1, wherein said housing (24) forming said combustion chamber is constructed so that said gas generants are placed therein after an annular bottom wall of said combustor cup has been welded to an edge portion of a lower end of said central cylindrical holder (4), an upper end portion of said combustor cup (14) being then bent by a press and fixed by a riveting (28) to a circumferential edge of said top wall of said central cylindrical holder (4) to seal said gas generants (13).

## Patentansprüche

1. Ein Gaserzeuger, der einen zentrischen zylindrischen Halter (4) aufweist, in welchem ein Explosionselement/Auslöser aufgenommen ist, mit einer Explosionskammer (10), die den Halter (4) umgibt und in welcher Gaserzeugungseinrichtungen (13) aufgenommen sind, mit einer Filterungs-/Kühlungskammer (18), die ringförmig ausgebildet ist, um die Explosionskammer (10) zu umgeben und daran angepaßt ist, das Einlassen eines Gases darin hinein zu erlauben, nachdem es durch an ihr vorgesehene Öffnungen (9) hindurchgetreten ist, die in Verbindung stehen mit der Explosionskammer (10), und mit Gasauslaßöffnungen (21), die in die Filterungs-/Kühlungskammer (18) eingeformt sind und durch welche das Gas in den Luftsack (air bag) eintritt, nachdem es durch einen Filter (20) und ein Kühlmittel (26) hindurchgetreten ist, wobei die Explosionskammer (10) ein Gehäuse (24) aufweist, das eine ringförmige obere Wand aufweist, die an einem inneren Kantenabschnitt davon an einer Umfangskante des zylindrischen Halters (4) befestigt ist, und mit einem Diffusor (12) und einem ringförmigen Verschluß (17), von denen ein verlängerter Abschnitt des Diffusors (12) und ein äußeres Ende des Verschlusses (17) zusammengeschweißt sind, um die Filterungs-/Kühlungskammer (18) zu bilden, wobei die Auslaßöffnungen (21) in dem verlängerten Abschnitt des Diffusors vorgesehen sind und der Diffusor eine obere Wand des Gehäuses abdeckt und mit der oberen Wand des Gehäuses (24) verbunden ist, wobei eine doppelte Wand der Explosionskammer (10) gebildet wird, **dadurch gekennzeichnet**, daß der Diffusor (12) eine obere Wand aufweist, die die obere Wand des Halters (4) abdeckt, wobei das Gehäuse (24) eine ringförmige untere Wand (16) aufweist, die an einem unteren Kantenabschnitt davon an einem Kantenabschnitt eines gegenüberliegenden Endes des Halters (4) befestigt ist, wobei der ringförmige Verschluß (17) die untere Wand des Gehäuses (24) der Explosionskammer abdeckt, wodurch eine doppelte Wand mit der ringförmigen unteren Wand des Gehäuses gebildet wird, wobei der ringförmige Verschluß (17) an einem inneren Kantenabschnitt davon an den Kantenabschnitt des unteren Endes des zylindrischen Halters (4) angeschweißt ist.

2. Gaserzeuger nach Anspruch 1, bei dem das Gehäuse (24), welches die Explosionskammer (10) bildet, so konstruiert ist, daß die Gaserzeugungseinrichtungen darin eingesetzt werden, nachdem ein innerer Umfangskantenabschnitt einer ringförmigen oberen Wand der Explosionsschale (14) an den Umfang der oberen Wand des zentralen zylindrischen Halters angeschweißt wurde, wobei der Deckel (16), welcher eine ringförmige untere Wand des Gehäuses (24) bildet, dann an einem Kantenabschnitt eines unteren Endes des zentralen zylindrischen Halters befestigt wird, wobei ein Umfangsabschnitt des Deckels mit einem Kantenabschnitt eines unteren Endes einer Seitenwand der Explosionsschale (14) verkrimpt wird, um die Gaserzeugungseinrichtungen abzudichten.

3. Gaserzeugung nach Anspruch 1, bei dem das Gehäuse (24), welches die Explosionskammer bildet, so konstruiert ist, daß die Gaserzeugungseinrichtungen darin eingesetzt werden, nachdem eine ringförmige untere Wand der Explosionsschale an einen Kantenabschnitt eines unteren Endes des zentralen zylindrischen Halters (4) angeschweißt wurde, und ein oberer Endabschnitt der Explosionsschale (14) dann umgebogen wird durch eine Presse und durch Vernieten (28) an einer Umfangskante der oberen Wand des zentralen zylindrischen Halters (4) befestigt wird, um die Gaserzeugungseinrichtungen (13) abzudichten.

## Revendications

1. Générateur de gaz ayant un support cylindrique central (4) dans lequel est logé un amorceur/renforçateur, une chambre de combustion (10) entourant ledit support (4) et contenant des agents générateurs de gaz (13), une chambre de filtre/réfrigérant (18) formée en anneau de manière à entourer ladite chambre de combustion (10), et à même de permettre l'entrée d'un gaz après que celui-ci est passé à travers des ouvertures (9) communiquant avec ladite chambre de combustion (10), et des orifices de sortie de gaz (21) formés dans ladite chambre de filtre/réfrigérant (18), à travers lesquels le gaz reflue dans le coussin gonflable après être passé à travers un filtre (20) et un réfrigérant (26), ladite chambre de combustion (10) présentant un boîtier (24) ayant une paroi supérieure annulaire fixée, sur sa partie de bord interne, à un bord périphérique dudit support cylindrique central (4), et un diffuseur (12) et une fermeture annulaire (17) étant prévus, une partie d'extension du diffuseur (12) et une extrémité externe de la fermeture (17) étant soudées conjointement, de manière à former la chambre de filtre/réfrigérant (18), lesdits orifices de sortie (21) étant ménagés dans une partie d'extension dudit diffuseur, et ledit diffuseur recouvrant une paroi supérieure dudit boitier et étant joint à la paroi supérieure dudit boîtier (24), en sorte de former une double paroi de ladite chambre de combustion (10), caractérisé en ce que ledit diffuseur (12) présente une paroi supérieure recouvrant ladite paroi supérieure dudit support (4), ledit boîtier (24) a une paroi inférieure annulaire (16) fixée, sur sa partie de bord interne, à une partie de bord de l'extrémité opposée dudit support (4), ladite fermeture annulaire (17) recouvre ladite paroi inférieure dudit boîtier (24) de ladite chambre de combustion, en sorte de former une double paroi avec la paroi inférieure annulaire dudit boîtier, ladite fermeture annulaire (17) étant soudée, sur sa partie de bord interne, à la partie de bord de l'extrémité inférieure dudit support cylindrique (4).

2. Générateur de gaz selon la revendication 1, dans lequel ledit boîtier (24) formant ladite chambre de combustion (10) est construit de telle sorte que lesdits agents générateurs de gaz soient placés à l'intérieur de celle-ci après qu'une partie de bord périphérique interne d'une paroi supérieure annulaire de la coupelle de combustion (14) a été soudée à la périphérie de ladite paroi supérieure dudit support cylindrique central, le couvercle (16) qui forme une paroi inférieure annulaire dudit boîtier (24) étant alors fixé à une partie de bord d'une extrémité inférieure dudit support cylindrique central, une partie périphérique dudit couvercle étant sertie sur une partie de bord d'une extrémité inférieure d'une paroi latérale de ladite coupelle de combustion (14) pour sceller lesdits agents générateurs de gaz.

3. Générateur de gaz selon la revendication 1, dans lequel ledit boîtier (24) formant ladite chambre de combustion est construit de telle sorte que lesdits éléments agents de gaz y soient placés à l'intérieur après qu'une paroi inférieure annulaire de ladite coupelle de combustion a été soudée à une partie de bord d'une extrémité inférieure dudit support cylindrique central (4), une partie terminale supérieure de ladite coupelle de combustion (14) étant alors ployée par une presse et fixée par rivetage (28) à un bord périphérique de ladite paroi supérieure dudit support cylindrique central (4) pour sceller lesdits agents générateurs de gaz (13).
